# FASCICULE DE BREVET EUROPEEN

(11) **EP 4 037 893 B1**
(45) Date de publication et mention de la délivrance du brevet: **26.11.2025**
(21) Numéro de dépôt: 20768356.6
(22) Date de dépôt: 11.09.2020
(51) Int. Cl.: B29C 65/00, B29C 65/48, B60R 13/02

(54) **PROCEDE DE COLLAGE D'ELEMENTS DE CARROSSERIE AUTOMOBILE ET PIECE MULTICOUCHE COLLEE AINSI OBTENUE**
VERFAHREN ZUM VERBINDEN VON KAROSSERIEELEMENTEN EINES KRAFTFAHRZEUGS UND DADURCH HERGESTELLTES MEHRSCHICHTIGES FORMTEIL
METHOD FOR BONDING MOTOR VEHICLE BODYWORK ELEMENTS AND BONDED MULTI-LAYER PART PRODUCED THEREBY

(30) Priorité: 03.10.2019 FR 1910973
(43) Date de publication de la demande: 10.08.2022
(73) Titulaire: SMRC Automotive Holdings Netherlands B.V., 1101 BA Amsterdam (NL)
(72) Inventeur: SAELEN, Marc, 59251 Alennes les Marais (FR)
(74) Mandataire: Ipsilon
(86) Numéro de dépôt international: PCT/EP2020/075510
(87) Numéro de publication internationale: WO 2021/063654

(56) Documents cités:
- EP-A1- 2 610 046
- EP-A2- 2 292 709

## Description

La présente invention concerne le domaine de l'assemblage par collage de pièces planes ou profilées (tridimensionnelles) telles que des pièces ou éléments que l'on retrouve, entre autres et en particulier dans le domaine automobile, par exemple dans l'assemblage de pièces de carrosserie et/ou de pièces d'intérieur, notamment de panneaux du tableau ou de la planche de bord, de panneaux décoratifs comme les panneaux de portières, etc.

On connaît dans l'état de la technique, bon nombre de procédés de collage de ce type d'éléments qui visent tous à obtenir une pièce finale constituée par un assemblage multicouche, autrement dit une pièce finale constituée de pièces individuelles préfabriquées que l'on superpose (dans une structure dite de type « sandwich ») les unes sur les autres en les collant. Le coût de fabrication et la qualité finale du produit dépendent notamment du nombre d'étapes de collage et donc aussi du temps passé à chaque étape, de la quantité et de la bonne répartition de la colle utilisée, de la complexité des machines mises en œuvre, etc.

Dans un souci continuel d'amélioration, il existe un vrai besoin pour un procédé de collage industrialisable qui soit plus performant, par exemple parce qu'il réduit le nombre d'étapes nécessaires, qu'il permet l'utilisation de machines ou d'outils techniquement simples et peu onéreuses, qu'il permet une meilleure répartition de la colle et/ou une diminution de la quantité de colle nécessaire pour un même degré de solidité du collage obtenu et/ou parce qu'il ne nécessite que peu de main d'œuvre, de réglages et/ou de contrôle, notamment au niveau de la qualité.

La publication EP2292709A2 divulgue déjà un procédé de collage de deux composants entre eux avec un joint interposé.

La présente invention a pour but de proposer un procédé de collage du type présenté ci-dessus qui remplisse une ou plusieurs, de préférence un maximum, de conditions qui lui permettent d'augmenter ses performances techniques et économiques.

A cet effet, la présente invention a pour objet un procédé de collage d'au moins trois éléments entre eux selon la revendication 1 et une pièce selon la revendication 9.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
[Fig. 1] représente une vue tridimensionnelle simplifiée de trois éléments à coller pour former une pièce, telle qu'une pièce utilisée dans la fabrication d'un véhicule automobile ;
[Fig. 2] représente une vue latérale en coupe des trois éléments de la figure 1 ;
[Fig. 3] représente une vue latérale en coupe de deux des trois éléments des figures 1 et 2 préassemblés et munis d'un cordon de colle ;
[Fig. 4] représente une vue latérale en coupe des trois éléments des figures 1 et 2 préassemblés et après l'étape de collage proprement dite ; et
[Fig. 5] représente une vue latérale en coupe d'une variante avec trois éléments assemblés et collés ensemble.

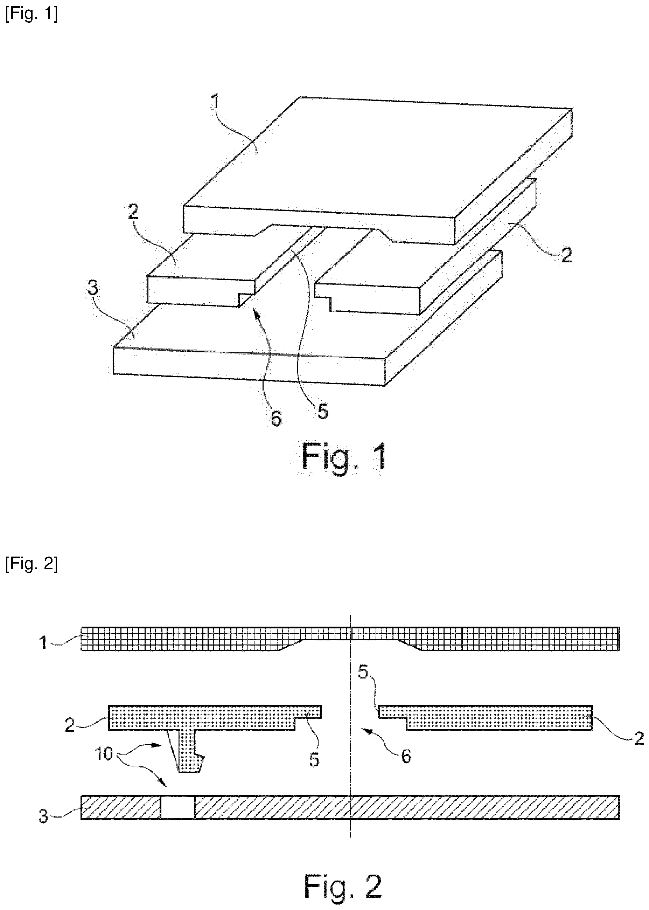

Comme évoqué, le procédé selon l'invention, dont on peut voir un produit physique sur la figure 1 à titre d'exemple non limitatif, est un procédé de collage d'au moins trois éléments 1 ; 2, 2', 2"... ; 3 entre eux, chaque élément 1 ; 2, 2', 2"... ; 3 étant de type panneau plan ou panneau profilé de géométrie 3D, tel qu'une pièce de carrosserie d'un véhicule automobile, en particulier une pièce intérieure ou de l'habillage intérieur d'un véhicule automobile, lesdits au moins trois éléments 1 ; 2, 2', 2"... ; 3 formant une structure multicouche formée par :
- un élément externe 1 mis en contact avec
- un ou plusieurs éléments intermédiaires 2, 2', 2"..., superposés entre eux le cas échéant, et dont l'élément le plus distant de l'élément externe 1 est à son tour mis en contact avec un élément interne 3, notamment un élément interne 3 faisant face à ou en direction de l'occupant ou aux occupants dudit véhicule automobile,
   procédé caractérisé en ce que :
   - l'on réalise, avant l'étape de collage proprement dite, au moins une étape de moulage, voire d'usinage, sur au moins deux des trois éléments 1 ; 2, 2', 2"... ; 3 précités, respectivement sur au moins n-1 des n éléments précités de sorte à créer au moins une structure usinée de type goulotte ou rainure 6 dans laquelle ou lesquelles un ou plusieurs cordons de colle 4 peuvent être injectés lors de l'étape de collage ;
   - l'on applique au moins un cordon de colle 4 sur au moins l'un desdits éléments 1 ; 2, 2', 2"... ; 3, notamment au niveau de la ou des rainures 6 précitées ;
   - l'on écrase suffisamment ledit ou lesdits cordons de colle 4 en rapprochant les éléments 1 ; 2, 2', 2"... ; 3 à coller entre eux de sorte que ledit ou lesdits cordons de colle 4 se répandent et débordent des structures moulées, voire usinées, de type rainure 6 et lient de façon structurelle les deux éléments externe 1 et interne 3 et les éléments intermédiaires 2, 2', 2"... pour former la structure multicouche souhaitée.

Comme on peut le voir sur la figure 1 à titre d'exemple non limitatif concret, on a représenté une pièce automobile, tel qu'un panneau composé de trois pièces ou éléments collés ensemble lorsqu'on les superpose. L'élément extérieur 1 est muni sur sa face interne d'une rainure centrale dont la section est par exemple trapézoïdale. Ses faces planes s'appuient sur les faces planes d'un élément intermédiaire 2 qui peut être traversé de part en part par une rainure dont les bords 5 forment les parois ou une partie des parois d'un canal ou rainure 6 de type goulotte lorsque la pièce est complètement assemblée. L'élément intermédiaire 2 repose sur un panneau plan (ou de géométrie 3D), l'élément interne 3 qui fournit le fond du canal créé lorsque les trois éléments 1, 2, 3 sont assemblés et collés fixement entre eux.

La figure 2 montre que la pièce ou l'élément intermédiaire 2 peut avantageusement présenter un moyen de fixation mécanique 10 ou tout autre type de fixation provisoire (soudure, collage temporaire, magnétique...), par exemple, comme suggéré un crochet élastique mâle coopérant avec un orifice traversant femelle situé, par exemple, comme montré ici sur l'élément interne 3. Ceci permet de fixer et/ou placer provisoirement deux des trois éléments à coller afin que ceux-ci ne bougent pas pendant l'opération de collage. De façon analogue et/ou complémentaire on peut prévoir plusieurs de ces moyens mécaniques 10 sur un ou plusieurs des éléments à assembler.

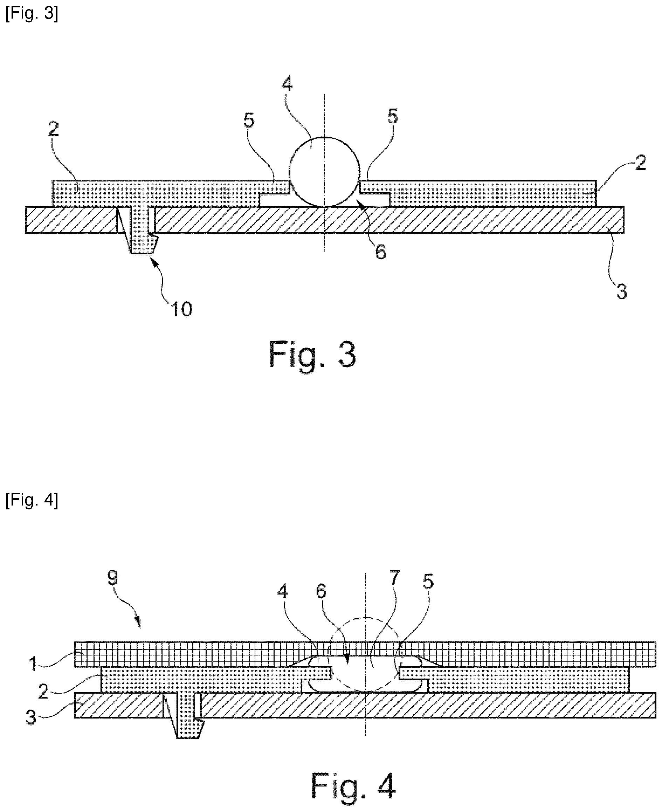

Comme on le voit sur la figure 3, une étape intermédiaire dans le procédé de collage prévoit le dépôt ou l'injection d'un cordon de colle 4 dans la rainure (goulotte) 6 de type canal ouvert. Ici, la colle est stable ou visqueuse pour garder une section circulaire dont la partie supérieure dépasse du canal en formation. Afin de répartir la colle dans tous les recoins prévus, on applique finalement l'élément externe 1 par pression ce qui déforme le cordon de colle 4 précité qui se transforme en boudin de colle 7 qui remplit le plus possible les espaces vides existant entre les différents éléments 1, 2, 3 et qui forme un couvercle pour la structure de type rainure 6 ou goulotte.

Comme évoqué, le procédé selon l'invention est avantageusement caractérisé en ce qu'au moins un cordon de colle 4, de préférence tous les cordons de colle 4 sont appliqués de façon à dépasser en hauteur ou épaisseur la ou les structures usinées ou moulées de type rainure 6 auxquelles ils sont destinés.

Selon une variante pratique, le procédé selon l'invention est caractérisé en ce que la colle formant les cordons de colle 4 est appliquée à l'aide d'un moyen d'injection, par exemple, de type seringue, pistolet à colle, extrudeur...

Egalement comme évoqué pour les figures 2 et 3, et comme on le voit aussi sur la figure 4, le procédé selon l'invention, encore caractérisé en ce qu'au moins deux éléments 1 ; 2, 2', 2"... ; 3 à coller directement entre eux sont munis, préalablement au collage, d'au moins un moyen de fixation provisoire 10, en particulier mécanique, notamment d'au moins un moyen de fixation par encliquetage et/ou correspondance de forme ou tout autre type de fixation provisoire (soudure, collage temporaire, magnétique...).

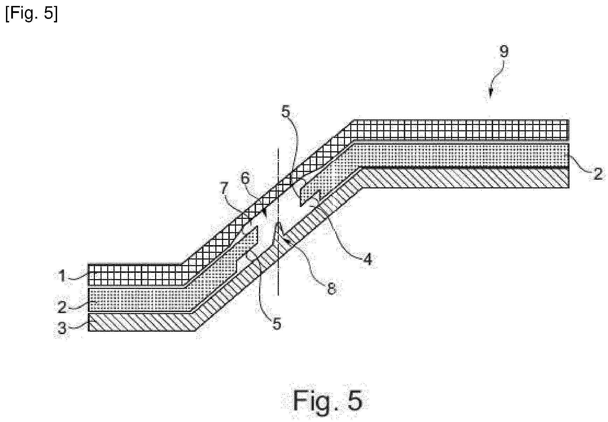

Avantageusement, au moins un élément intermédiaire 2, 2', 2", ..., de préférence tous les éléments intermédiaires 2, 2', 2", ... sont moulés ou usinés de façon à créer au moins un passage traversant l'épaisseur du panneau pour un cordon de colle 4 qui, pris en combinaison avec l'un des deux ou les deux des éléments externe 1 et interne 3, forme un boudin de colle 7 dont la section, vue dans le plan de l'épaisseur desdits éléments 1 ; 2, 2', 2"... ; 3, présente une forme de H allongé sur son flanc ou sensiblement une forme de H allongé sur son flanc. Ceci est bien visible sur les figures 4 et 5.

De façon préférée, on applique la colle formant les cordons de colle 4 par injection à une température où sa viscosité est suffisamment élevée pour conserver une forme extrudée pour lesdits cordons de colle 4 jusqu'à ce que les éléments 1 ; 2, 2', 2"... ; 3 à coller soient mis en contact et une viscosité suffisamment faible pour s'écouler autour des bords 5 du ou des éléments intermédiaires 2, 2', 2"..., lors du serrage des éléments 1 ; 2, 2', 2"... ; 3 entre eux.

Ceci est illustré par la section circulaire du cordon 4 sur la figure 3.

Selon un autre aspect, le procédé selon l'invention est en outre caractérisé en ce que l'on moule, voire usine, la surface d'au moins l'un des deux éléments externe 1 et interne 3, de préférence à la fois les deux éléments 1, 3, de sorte à créer localement, sur ces derniers, au moins une protubérance ou excroissance 8 de type ergot ou nez faisant saillie vers le ou les éléments intermédiaires 2, 2', 2"...

Cette variante particulièrement utile est illustrée à la figure 5, où l'on a muni la face tournée vers l'intérieur de l'élément interne 3 d'un nez ou d'une protubérance 8 volumique qui prend une partie de l'espace dévolu à la colle du boudin de colle 7 de sorte à diminuer le volume totale à occuper et donc mieux répartir la colle dans les volumes restants, la pression appliquée au niveau dudit boudin 7 étant plus faible en raison de la géométrie des éléments 1, 2, 3 à assembler.

Ainsi, selon une autre caractéristique, le procédé selon l'invention se distingue par le fait que l'on ajuste la hauteur et/ou le volume de la ou des protubérances 8 à la force de pression que l'on prévoit d'appliquer lors de l'écrasement des différents éléments 1 ; 2, 2', 2"... ; 3 de façon à obtenir une répartition la plus homogène possible de la colle après pressage dans les différentes structures usinées ou moulées de type rainure 6.

Selon un autre aspect, le procédé selon l'invention est caractérisé en ce que l'on moule, voire usine, au moins l'un des éléments intermédiaires 2, 2', 2"..., en particulier tous les éléments intermédiaires 2, 2', 2"... empilés les uns sur les autres de sorte à créer, lors de la superposition desdits éléments 1 ; 2, 2', 2"... ; 3, au moins un cordon de colle 4 global réalisé sous la forme d'une gorge dont le profilé est à géométrie variable et adapté en fonction de la pression de la colle que l'on prévoit d'appliquer pour une répartition la plus homogène possible dans les structures usinées ou moulées de type rainure 6.

Une telle gorge peut, par exemple, présenter des largeurs, hauteurs, renfoncements, excavations, ou saillies adaptées selon les besoins liés à la pièce à fabriquer. Une grande flexibilité est donc possible.

Enfin, la présente invention a encore pour objet une pièce tridimensionnelle, en particulier une pièce automobile 9, notamment pièce de carrosserie d'un véhicule automobile, en particulier pièce d'intérieur et/ou d'habillage intérieur, ladite pièce étant de type multicouche, caractérisée en ce qu'elle comporte au moins trois éléments 1 ; 2, 2', 2"... ; 3 sous forme de panneaux plans ou profilés (de géométrie 3D) qui ont été assemblés entre eux par un collage obtenu par la mise en œuvre du procédé de collage selon l'invention.

Outre les avantages susmentionnés, le procédé selon la présente invention permet avantageusement de simplifier et d'automatiser le processus de collage.

En particulier, l'application de la colle sous forme de cordon de colle 4 lors d'une seule étape réduit significativement les coûts de fabrication.

Par ailleurs, le procédé selon l'invention permet de garantir une application homogène de la colle ce qui agit favorablement sur la qualité du collage et donc sur la qualité du produit final assemblé et collé.

La fourniture de protubérances 8 spécifiques comme décrit agit également dans le même sens.

En venant recouvrir (encapsuler partiellement) les bords 5 des couches ou éléments intermédiaires 2, 2', 2"... grâce à l'aménagement d'une forme ou structure tridimensionnelle usinée dans la matière même dudit élément qui soit de type rainure 6, goulotte, canal ou analogue, la répartition de la colle est améliorée ce qui améliore à son tour la qualité du produit final.

Cette structure tridimensionnelle à géométrie 3D peut, pour tout ou partie, résulter de l'assemblage de plusieurs strates ou couches intermédiaires qui définissent les différentes tranches empilées qui formeront à la fin ladite structure. Par exemple, pour la formation d'un canal classique de section en forme de U, un élément fera office de fond et un ou plusieurs éléments individuels évidés superposés ou empilés les uns sur les autres définiront les parois latérales en ajoutant de la matière à certains endroits et en laissant un vide pour la formation d'une rigole à d'autres endroits de sorte à construire tranche par tranche le canal à la géométrie souhaitée.

Le cordon de colle 4 est par exemple réalisé à l'aide d'une colle dite silicone qui est appliquée à température ambiante. Il peut aussi être réalisé sous la forme d'un cordon de matière thermoplastique collante coulée.

Les éléments 1, 2, 2', 2", ... 3 ou pièces à coller sont par exemple des pièces structurelles en matière plastique, notamment en polypropylène, en polycarbonate, en polypropylène chargé de fibres de verre ou de fibres naturelles ou une autre matière adaptée telle que le bois, un métal, etc. Les épaisseurs desdits éléments peuvent varier mais sont généralement comprises entre 1 mm et 4 mm, à titre d'exemple non limitatif.

Sur les pièces ou éléments 1, 2, 2', 2", ... 3 de forme tridimensionnelle, les forces de pression exercées sur le cordon de colle 4 évoluent en fonction de la forme de la pièce et de la position du cordon sur cette pièce. Afin de garantir un collage efficace, des protubérances 8 peuvent être prévues de façon isolées, multiple sur un ou plusieurs desdits éléments 1, 2, 2', 2"..., 3. Ici encore, une grande flexibilité est possible en combinant, un certain nombre, des emplacements et des volumes spécifiques pour chaque cas.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Procédé de collage d'au moins trois éléments (1 ; 2, 2', 2"... ; 3) entre eux, chaque élément (1 ; 2, 2', 2"... ; 3) étant de type panneau plan ou panneau profilé de géométrie 3D, tel qu'une pièce de carrosserie d'un véhicule automobile, en particulier une pièce intérieure ou de l'habillage intérieur d'un véhicule automobile, lesdits au moins trois éléments (1 ; 2, 2', 2"... ; 3) formant une structure multicouche formée par :
- un élément externe (1) mis en contact avec
- un ou plusieurs éléments intermédiaires (2, 2', 2"...), superposés entre eux, et dont l'élément le plus distant de l'élément externe (1) est à son tour mis en contact avec un élément interne (3), notamment un élément interne (3) faisant face à l'occupant ou aux occupants dudit véhicule automobile,
procédé **caractérisé en ce que** :
- l'on réalise, avant l'étape de collage proprement dite, au moins une étape de moulage, voire d'usinage, sur au moins deux des trois éléments (1 ; 2, 2', 2"... ; 3) précités, respectivement sur au moins n-1 des n éléments précités de sorte à créer au moins une structure moulée, voire usinée, de type goulotte ou rainure (6) dans laquelle ou lesquelles un ou plusieurs cordons de colle (4) peuvent être injectés lors de l'étape de collage ;
- l'on applique au moins un cordon de colle (4) sur au moins l'un desdits éléments (1 ; 2, 2', 2"... ; 3), notamment au niveau de la ou des rainures (6) précitées ;
- l'on écrase suffisamment ledit ou lesdits cordons de colle (4) en rapprochant les éléments (1 ; 2, 2', 2"... ; 3) à coller entre eux de sorte que ledit ou lesdits cordons de colle (4) se répandent et débordent des structures moulées, voire usinées, de type rainure (6) et lient de façon structurelle les deux éléments externe (1) et interne (3) et les éléments intermédiaires (2, 2', 2"...) pour former la structure multicouche souhaitée et **en ce qu'**au moins un élément intermédiaire (2, 2', 2", ...), de préférence tous les éléments intermédiaires (2, 2', 2", ...) sont usinés ou moulés de façon à créer au moins un passage traversant l'épaisseur du panneau pour un cordon de colle (4) qui, pris en combinaison avec l'un des deux ou les deux des éléments externe (1) et interne (3), forme un boudin de colle (7) dont la section, vue dans le plan de l'épaisseur desdits éléments (1 ; 2, 2', 2"... ; 3), présente une forme de H allongé sur son flanc ou sensiblement une forme de H allongé sur son flanc.

2. Procédé selon la revendication 1, **caractérisé en ce qu'**au moins un cordon de colle (4), de préférence tous les cordons de colle (4) sont appliqués de façon à dépasser en hauteur ou épaisseur la ou les structures usinées ou moulées de type rainure (6) auxquelles ils sont destinés.

3. Procédé selon la revendication 1 ou 2, **caractérisé en ce que** la colle formant les cordons de colle (4) est appliquée à l'aide d'un moyen d'injection, par exemple de type seringue, ou pistolet.

4. Procédé selon l'une quelconque des revendications 1 à 3, **caractérisé en ce qu'**au moins deux éléments (1 ; 2, 2', 2"... ; 3) à coller directement entre eux sont munis, préalablement au collage, d'au moins un moyen de fixation provisoire (10), en particulier mécanique, notamment d'au moins un moyen de fixation par encliquetage et/ou correspondance de forme.

5. Procédé selon l'une quelconque des revendications 1 à 4, **caractérisé en ce que** l'on applique la colle formant les cordons de colle (4) par injection à une température où sa viscosité est suffisamment élevée pour conserver une forme extrudée pour lesdits cordons de colle (4) jusqu'à ce que les éléments (1 ; 2, 2', 2"... ; 3) à coller soient mis en contact et une viscosité suffisamment faible pour s'écouler autour des bords (5) du ou des éléments intermédiaires (2, 2', 2"), lors du serrage des éléments (1 ; 2, 2', 2"... ; 3) entre eux.

6. Procédé selon l'une quelconque des revendications 1 à 5, **caractérisé en ce que** l'on moule, voire usine, la surface d'au moins l'un des deux éléments externe (1) et interne (3), de préférence à la fois les deux éléments (1, 3), de sorte à créer localement, sur ces derniers, au moins une protubérance ou excroissance (8) de type ergot ou nez faisant saillie vers le ou les éléments intermédiaires (2, 2', 2").

7. Procédé selon la revendication 6, **caractérisé en ce que** l'on ajuste la hauteur et/ou le volume de la ou des protubérances (8) à la force de pression que l'on prévoit d'appliquer lors de l'écrasement des différents éléments (1 ; 2, 2', 2"... ; 3) de façon à obtenir une répartition la plus homogène possible de la colle après pressage dans les différentes structures usinées ou moulées de type rainure (6).

8. Procédé selon l'une quelconque des revendications 1 à 7, **caractérisé en ce que** l'on moule, voire usine, au moins l'un des éléments intermédiaires (2, 2', 2"...), en particulier tous les éléments intermédiaires (2, 2', 2", ...) empilés les uns sur les autres de sorte à créer, lors de la superposition desdits éléments (1 ; 2, 2', 2"... ; 3), au moins un cordon de colle (4) global réalisé sous la forme d'une gorge dont le profilé est à géométrie variable et adapté en fonction de la pression de la colle que l'on prévoit d'appliquer pour une répartition la plus homogène possible dans les structures usinées ou moulées de type rainure (6).

9. Pièce tridimensionnelle, en particulier pièce automobile (9), notamment pièce de carrosserie d'un véhicule automobile, en particulier pièce d'intérieur et/ou d'habillage intérieur, ladite pièce étant de type multicouche, **caractérisée en ce qu'**elle comporte au moins trois éléments (1 ; 2, 2', 2"... ; 3) sous forme de panneaux plans ou profilés qui ont été assemblés entre eux par un collage obtenu par la mise en œuvre du procédé de collage selon l'une quelconque des revendications 1 à 8.

## Patentansprüche

1. Innenverkleidungsteil für ein Fahrzeug, wobei das Verkleidungsteil Folgendes umfasst: einerseits eine Trägerschicht (1), die eine Innenseite (1a) mit mindestens einem die Trägerschicht (1) durchquerenden Durchgangsloch (1b), eine Dekorschicht (2) mit einer zur Innenseite (1a) der Trägerschicht (1) ausgerichteten Innenseite (2a) und einer Außenseite (2b), die eine sichtbare Seite des Verkleidungsteils definiert, und eine Komfortschicht (3), die sich zwischen der Dekorschicht (2) und der Trägerschicht (1) erstreckt, aufweist, und andererseits mindestens ein Funktionselement (4) mit einem Funktionsteil (4a), der an der Innenseite (2a) der Dekorschicht (2) anliegt, und einem länglichen Verbindungsteil (4b), wobei der längliche Verbindungsteil (4b), der vorzugsweise fein oder flach ist, d. h. eine geringe Dicke aufweist, in Bezug auf seinen Funktionsteil (4a) eine Verlängerung ausbildet, die die elektrische Verbindung des Funktionsteils (4a) mit einer Versorgungs-/Stromquelle und/oder mit einer elektrischen/elektronischen Vorrichtung ermöglicht, **dadurch gekennzeichnet, dass** es ferner eine Dichtungsvorrichtung umfasst, die zumindest einen Dichtungsring (5) aufweist, der die Komfortschicht (3) in der Achse des bzw. des einen der Durchgangslöcher (1b), für das er somit vorgesehen ist, durchquert und Folgendes aufweist: einerseits einen inneren Durchgang (52), den das bzw. das mindestens eine der Verbindungsteile (4b) durch zwei Öffnungen, eine Eingangs- und eine Ausgangsöffnung, des inneren Durchgangs (52) durchquert, um, durch das Durchgangsloch (1b) verlaufend, die Trägerschicht (1) zu erreichen und zu durchqueren, und andererseits zwei gegenüberliegende Dichtungsflächen (50a, 51a), und zwar eine erste Dichtungsfläche (50a), die die Eingangsöffnung umfasst und mit dem bzw. mindestens einem der Funktionsteile (4a) in Kontakt steht und/oder daran befestigt ist und/oder an der Innenseite (2a) der Dekorschicht (2) befestigt ist, und eine zweite Dichtungsfläche (51a), die mit der Innenseite (1a) der Trägerschicht (1) um das vorgesehene Durchgangsloch (1b) in Kontakt steht und/oder daran befestigt ist, wobei sich die Komfortschicht (3) vollständig außerhalb des bzw. jedes Durchgangslochs (1b) erstreckt.

2. Innenverkleidungsteil nach Anspruch 1, **dadurch gekennzeichnet, dass** sich die Ausgangsöffnung des inneren Durchgangs (52) des Dichtungsrings (5) innerhalb oder außerhalb des dafür vorgesehenen Durchgangslochs (1b) befindet.

3. Innenverkleidungsteil nach einem der Ansprüche 1 bis 2, **dadurch gekennzeichnet, dass** der oder jeder Dichtungsring (5) im Allgemeinen eine rohrförmige Form aufweist, die Folgendes aufweist: einerseits einen Hals (5a), der radial vorsteht und die beiden gegenüberliegenden Dichtungsflächen (50a, 51a) aufweist, und andererseits einen rohrförmigen Teil (5b), der die Ausgangsöffnung des inneren Durchgangs (52) des Dichtungsrings (5) aufweist.

4. Innenverkleidungsteil nach einem der Ansprüche 1 bis 3, **dadurch gekennzeichnet, dass** die erste Dichtungsfläche (50a) und/oder die zweite Dichtungsfläche (51a) jeweils im Dichtungsring (5) angebracht und aus einer vorzugsweise torus- oder ringförmigen Kompressionsdichtung gebildet ist/sind, die vorzugsweise aus Kautschuk oder einem Schaum oder einem anderen komprimierbaren oder elastisch verformbaren weichen Material hergestellt ist.

5. Innenverkleidungsteil nach einem der Ansprüche 1 bis 4, **dadurch gekennzeichnet, dass** die erste Dichtungsfläche (50a) und/oder die zweite Dichtungsfläche (51a) jeweils in einen Dichtungsring (5) integriert ist/sind, indem sie direkt aus dem Material gebildet ist/sind, aus dem zumindest ein Teil des Dichtungsrings (5) hergestellt ist, und dass das Material elastisch verformbar ist, um durch Kompression des Materials eine Kontaktdichtung zu gewährleisten.

6. Innenverkleidungsteil nach einem der Ansprüche 1 bis 5, **dadurch gekennzeichnet, dass** die Dichtungsvorrichtung ferner mindestens eine gegebenenfalls elastisch verformbare Ausstülpung (11a) umfasst, die in die Innenseite (1a) der Trägerschicht (1) integriert ist, indem sie sich um das bzw. das eine der Durchgangslöcher (1b), für die der bzw. der eine der Dichtungsringe (5) vorgesehen ist, erstreckt, und dass die zweite Dichtungsfläche (51a) des Dichtungsrings (5) mit der entsprechenden Ausstülpung (11a) in Kontakt steht und/oder daran befestigt ist und so eine Kontaktdichtung gewährleistet.

7. Innenverkleidungsteil nach einem der Ansprüche 1 bis 5, **dadurch gekennzeichnet, dass** die zweite Dichtungsfläche (51a) des bzw. des mindestens einen der Dichtungsringe (5) eine gegebenenfalls verformbare Ausstülpung umfasst, die mit der Innenseite (1a) der Trägerschicht (1) um das Durchgangsloch (1b) in Kontakt steht und/oder daran befestigt ist und so eine Kontaktdichtung gewährleistet.

8. Innenverkleidungsteil nach einem der Ansprüche 1 bis 7, **dadurch gekennzeichnet, dass** die erste Dichtungsfläche (50a) ferner mit einem doppelseitigen Klebeband (53) versehen oder mit einer Klebemasse (54) bestrichen ist, um ihre Befestigung an dem bzw. zumindest dem einen der Funktionsteile (4a) und/oder an der Innenseite (2a) der Dekorschicht (2) zu ermöglichen, und/oder dass die zweite Dichtungsfläche (51a) ferner mit einem doppelseitigen Klebeband versehen oder mit einer Klebemasse bestrichen ist, um ihre Befestigung an der Innenseite (1a) der Trägerschicht (1) um das vorgesehene Durchgangsloch (1b) zu ermöglichen.

9. Verfahren zur Herstellung eines Verkleidungsteils nach einem der Ansprüche 1 bis 8, **dadurch gekennzeichnet, dass** es in der Ausführung der folgenden Schritte unter Verwendung einer Schäumform (M) zum Einspritzen von flüssigem Expansionsschaum (P), beispielsweise einem flüssigen Expansionsschaum des Typs Polyurethan, besteht, wobei die Form (M) eine Matrize (M1) und einen Stempel (M2) umfasst, in den zuvor die Trägerschicht (1) eingelegt wurde,
- i) Anbringen und Befestigen des Funktionsteils (4a) des bzw. jedes Funktionselements (4) an der Innenseite (2a) der Dekorschicht (2),
- ii) Einlegen der Dekorschicht (2) in die Matrize (M1), wobei ihre Innenseite (2a) der Innenseite der Form (M) zugewandt ist,
- iii) Befestigen des bzw. jedes Dichtungsrings (5) mit seiner ersten Dichtungsfläche (50a) an dem bzw. jedem vorgesehenen Funktionsteil (4a) und/oder an der Innenseite (2a) der Dekorschicht (2) durch Einsetzen des bzw. der vorgesehenen Verbindungsteile (4b) in den inneren Durchgang (52) des bzw. der Dichtungsringe (5), sodass der bzw. jeder Verbindungsteil (4b) den entsprechenden Dichtungsring (5) durchquert,
- iv) Schließen der Form (M) mit der Trägerschicht (1), wobei die Form (M) dazu ausgelegt ist, dass beim Schließen der bzw. jeder vorgesehene Dichtungsring (5) an dem bzw. dem einen der Durchgangslöcher (1b) einerseits in der Achse des vorgesehenen Durchgangslochs (1b) angeordnet ist, um das Einsetzen des bzw. der vorgesehenen Verbindungsteile (4b) in das vorgesehene Durchgangsloch (1b) zu ermöglichen, und andererseits durch seine zweite Dichtungsfläche (51a) mit der Innenseite (1a) der Trägerschicht (1) um das vorgesehene Durchgangsloch (1b) in Kontakt kommt,
- v) Einspritzen eines Expansionsschaums (P) in den Raum (E), der die Dekorschicht (2) und die Trägerschicht (1) trennt, oder Einspritzen eines Expansionsschaums (P) in die Matrize (M1) vor dem Schließen der Form (M) zwischen dem Schritt iii) und dem Schritt iv),
- vi) nach Expansion und Abkühlen des Schaums (P), der den bzw. die Dichtungsringe (5) außerhalb des bzw. der Durchgangslöcher (1b) umgibt, Öffnen der Form (M) und Herausnehmen des Verkleidungsteils.

## Claims

1. Inner trim component for a vehicle, said trim component comprising, on the one hand, a support layer (1) having an internal face (1a) having at least one passage hole (1b) passing through the support layer (1), an appearance layer (2) having an internal face (2a) turned towards the internal face (1a) of the support layer (1) and an external face (2b) defining a visible face of the trim component and a comfort layer (3) extending between the appearance layer (2) and the support layer (1) and, on the other hand, at least one functional element (4) comprising a functional part (4a) pressed against the internal face (2a) of the appearance layer (2) and an elongate connection part (4b), the elongate connection part (4b), which is preferably thin or flat, i.e. of small thickness, forming an extension with respect to its functional part (4a) allowing the electrical connection of the functional part (4a) to an electrical energy/power source and/or to an electrical/electronic device, **characterized in that** it further comprises a sealing device comprising at least one sealing ring (5) passing through the comfort layer (3) concentrically with the or one of the passage hole(s) (1b) to which it is thus dedicated and having, on the one hand, an internal passage (52) that the or at least one of the connection part(s) (4b) passes through, via two openings, respectively an inlet opening and an and outlet opening, of the internal passage (52), to meet and pass through the support layer (1), passing through the dedicated passage hole (1b) and, on the other hand, two opposite sealing faces (50a, 51a), namely a first sealing face (50a) comprising the inlet opening and being in contact with and/or fastened to the or at least one of the functional part(s) (4a) and/or to the internal face (2a) of the appearance layer (2) and a second sealing face (51a) in contact with and/or fastened to the internal face (1a) of the support layer (1) around the dedicated passage hole (1b), the comfort layer (3) extending entirely outside the or each passage hole (1b).

2. Inner trim component, according to Claim 1, **characterized in that** the outlet opening of the internal passage (52) of the sealing ring (5) is situated in or beyond the dedicated passage hole (1b).

3. Inner trim component, according to either one of Claims 1 and 2, **characterized in that** the or each sealing ring (5) generally has a tubular shape having, on the one hand, a collar (5a) that projects radially and has the two opposite sealing faces (50a, 51a) and, on the other hand, a tubular part (5b) having the outlet opening of the internal passage (52) of the sealing ring (5).

4. Inner trim component, according to any one of Claims 1 to 3, **characterized in that** the first sealing face (50a) and/or the second sealing face (51a) is/are each added into the sealing ring (5) and constituted by a compression seal, preferably of toroidal or annular shape, preferably made from a rubber or a foam or any other flexible, compressible or elastically deformable material.

5. Inner trim component, according to any one of Claims 1 to 4, **characterized in that** the first sealing face (50a) and/or the second sealing face (51a) is/are each integrated in the sealing ring (5), being directly constituted by the material from which at least a part of the sealing ring (5) is manufactured, and **in that** the material is elastically deformable to ensure contact sealing by compression of the material.

6. Inner trim component, according to any one of Claims 1 to 5, **characterized in that** the sealing device further comprises at least one protrusion (11a), which is optionally elastically deformable, and integrated in the internal face (1a) of the support layer (1), extending around the or one of the passage hole(s) (1b) to which the or one of the sealing ring(s) (5) is dedicated, and **in that** the second sealing face (51a) of the sealing ring (5) is in contact with and/or fastened to the corresponding protrusion (11a), ensuring contact sealing.

7. Inner trim component, according to any one of Claims 1 to 5, **characterized in that** the second sealing face (51a) of the or at least one of the sealing ring(s) (5) comprises a protrusion, which is optionally elastically deformable, in contact with and/or fastened to the internal face (1a) of the support layer (1) around the passage hole (1b), ensuring contact sealing.

8. Inner trim component, according to any one of Claims 1 to 7, **characterized in that** the first sealing face (50a) is also covered with a double-sided adhesive (53) or coated with an adhesive mass (54) so as to allow it to be fastened to the or at least one of the functional part(s) (4a) and/or to the internal face (2a) of the appearance layer (2), and/or the second sealing face (51a) is also covered with a double-sided adhesive or coated with an adhesive mass so as to allow it to be fastened to the internal face (1a) of the support layer (1) around the dedicated passage hole (1b).

9. Method for producing a trim component according to any one of Claims 1 to 8, **characterized in that** it consists in carrying out the following steps, using a foaming mould (M) dedicated to the injection of liquid expanding foam (P), for example a liquid expanding foam of the polyurethane type, said mould (M) comprising a die (M1) and a punch (M2) into which the support layer (1) is loaded beforehand,
- i) pressing and fastening the functional part (4a) of the or each functional element (4) onto the internal face (2a) of the appearance layer (2),
- ii) loading the appearance layer (2) into the die (M1) with its internal face (2a) turned towards the inside of the mould (M),
- iii) fastening the or each sealing ring (5), via its first sealing face (50a), to the or each dedicated functional part (4a) and/or to the internal face (2a) of the appearance layer (2) by inserting the one or more dedicated connection part(s) (4b) into the internal passage (52) of the one or more sealing ring(s) (5) such that the or each connection part(s) (4b) passes through the corresponding sealing ring (5),
- iv) closing the mould (M) with the support layer (1), said mould (M) being configured such that, during the closure, the or each sealing ring (5) dedicated to the or one of the passage hole(s) (1b), on the one hand, is disposed concentrically with said dedicated passage hole (1b) to allow the insertion into said dedicated passage hole (1b) of the one or more dedicated connection part(s) (4b) and, on the other hand, comes into contact, via its second sealing face (51a), with the internal face (1a) of the support layer (1) around the dedicated passage hole (1b),
- v) injecting an expanding foam (P) into the space (E) separating the appearance layer (2) and the support layer (1), or injecting an expanding foam (P) into the die (M1) prior to the closure of the mould (M) between step iii) and step iv),
- vi) after expansion and cooling of the foam (P), surrounding the one or more sealing ring(s) (5) outside the one or more passage hole(s) (1b), opening the mould (M) and demoulding the trim component.
